# EUROPÄISCHE PATENTSCHRIFT

(11) **EP 1 107 888 B1**
(45) Veröffentlichungstag und Bekanntmachung des Hinweises auf die Patenterteilung: **16.11.2005**
(21) Anmeldenummer: 00943641.1
(22) Anmeldetag: 25.05.2000
(51) Int. Cl.: B60S 1/04, B60S 1/32

(54) **SCHEIBENWISCHER**
WIPER
ESSUIE-GLACE

(30) Priorität: 28.06.1999 DE 19929494; 16.02.2000 DE 10006850
(43) Veröffentlichungstag der Anmeldung: 20.06.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE2000/001694
(87) Internationale Veröffentlichungsnummer: WO 2001/000464

(56) Entgegenhaltungen:
- DE-A- 3 923 623
- DE-A- 4 142 163
- FR-A- 2 632 897
- US-A- 5 903 953

## Beschreibung

Die Erfindung betrifft einen Scheibenwischer für ein Fahrzeug, insbesondere Kraftfahrzeug, mit den im Oberbegriff des Anspruchs 1 genannten Merkmalen.

### Stand der Technik

Scheibenwischer werden üblicherweise dazu eingesetzt, Scheiben von Kraftfahrzeugen zu wischen, um eine freie Sicht eines Fahrzeugführers zu gewährleisten. Hierzu besitzen die Scheibenwischer einen Wischerarm, der über einen Wischerantrieb in eine Schwenk- oder Pendelbewegung versetzbar ist. Der Wischerarm ist mit seinem einen Ende mit einer karosseriefesten Wischerwelle verbunden, während das andere, freie Ende des Wischerarmes ein Wischerblatt trägt. Hinsichtlich der Verbindung zwischen Wischerblatt und Wischerarm sind verschiedene Konstruktionen bekannt, bei denen entweder das Wischerblatt gelenkig an dem Wischerarm angelenkt ist oder der Wischerarm ein in Scheibenrichtung vorgespanntes Wischerblatt fest trägt.

Je nach konstruktiver Gestaltung des Kraftfahrzeuges ist der Scheibenwischer zum Teil durch eine Verlängerung einer Motorraumabdeckhaube verdeckt angeordnet oder dieser ist sichtbar angeordnet. Insbesondere bei den nicht verdeckt angeordneten Scheibenwischern werden diese während eines bestimmungsgemäßen Einsatzes des Kraftfahrzeuges durch einen Fahrtwind angeströmt. Hierdurch kommt es insbesondere in hohen Geschwindigkeitsbereichen des Kraftfahrzeuges zu störenden Windgeräuschen.

Aus der FR-A-2 632 897 ist ein Scheibenwischer mit einem Wischerarm der eingangs genannten Art bekannt. Der Wischerarm weist ein im Wesentlichen U-förmig gestaltetes Profilteil auf, das mit Luftstromöffnungen versehen ist.

### Vorteile der Erfindung

Der erfindungsgemäße Scheibenwischer mit den im Anspruch 1 genannten Merkmalen bietet demgegenüber dem Vorteil, dass in einfacher Weise die Strömungsgeräusche reduziert sind. Dadurch, dass ein Wischerarm das Wischerblatt zumindest teilweise umschließt und von einem im Wesentlichen U-förmigen, drei Schenkel aufweisenden Profilteil gebildet ist, wobei das Profilteil einen im Wesentlichen in Fahrtrichtung des Fahrzeugs weisenden Schenkel aufweist und an den weiteren der Schenkel wenigstens eine Luftausströmöffnung ausgebildet ist, wobei der im Wesentlichen in Fahrtrichtung weisende Schenkel ein in Richtung der zu wischenden Scheibe weisende, integrierte Spoilerlippe aufweist, die aus einem elastischen Material besteht, wird ermöglicht, einen Spalt zwischen der zu wischenden Scheibe und dem Wischerarm zu minimieren, wobei selbst bei kurzzeitigem, geringfügigem Auftreffen des Wischerarms auf die Scheibe die Spoilerlippe die Stoßkräfte auffängt, so daß Beschädigungen der Scheibe und/oder des Wischerarmes vermieden sind. Ferner ist ermöglicht, den den Wischerarm anströmenden Luftstrom durch die Ausbildung als integrierten Spoiler über den Wischerarm zu leiten. Je nach konkreter Ausbildung des Spoilers wird hierdurch ein Staudruck an der Vorderseite des Wischerarmes vermieden, so dass eine Geräusche hervorrufende Wirbelbildung an Strömungskanten des Wischerarmes im Wesentlichen verhindert ist. Ferner wird durch die Ausbildung des integrierten Spoilers erreicht, dass die Umlenkung des Luftstromes eine Gegenkraft erzeugt, die den Wischerarm in Richtung der zu reinigenden Scheibe drängt, so dass eine zusätzliche Auflagekraft des Wischerblattes erzeugt ist. Insbesondere bei hohen Geschwindigkeiten wird hierdurch das Wischbild verbessert. Die gleichzeitig vorgesehene, wenigstens eine Luftausströmöffnung an den weiteren Schenkeln, das heißt an einem oberen und/oder einem hinteren Schenkel des Wischerarmes - in Luftanströmrichtung gesehen - wird ein Aufbau eines Staudruckes in dem von dem U-förmigen Profilteil umgebenden Innenraum des Wischerarmes verhindert. Ein derartiger Staudruck würde zu einer von der zu wischenden Scheibe weg gerichteten Kraftkomponente des Wischerarmes führen, so dass die, diesen Staudruck verhindernde zusätzliche Öffnung zu einer weiteren Verbesserung der Wischqualität führt.

Weitere bevorzugte Ausgestaltungen der Erfindung ergeben sich aus den übrigen, in den Unteransprüchen genannten Merkmalen.

### Zeichnungen

Die Erfindung wird nachfolgend anhand der Zeichnungen näher erläutert. Es zeigen:
- Figur 1: eine schematische Gesamtansicht eines Scheibenwischers;
- Figuren 2 bis 9: schematisch Perspektivansichten von Wischerarmen in unterschiedlichen Ausführungen;
- Figuren 10 bis 12: Schnittdarstellungen durch einen ein Wischerblatt aufnehmenden Wischerarm in nicht erfindungsgemäßer Ausführung und
- Figur 13: eine Schnittdarstellung durch einen Scheibenwischer gemäß der Erfindung.

### Beschreibung des Ausführungsbeispiels

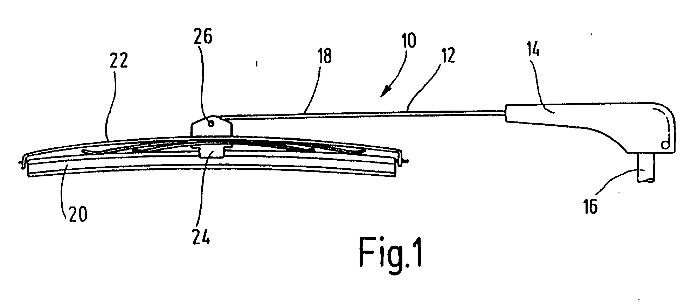

Figur 1 zeigt zur Verdeutlichung den prinzipiellen Aufbau eines Scheibenwischers 10. Der Scheibenwischer 10 besitzt einen Wischerarm 12, dessen eines Ende 14 drehfest auf einer Wischerwelle 16 angeordnet ist. Das andere, freie Ende 18 des Wischerarmes 12 trägt ein Wischerblatt 20. Das Wischerblatt 20 ist in einem Haltebügel 22 gehalten, der über ein Befestigungsteil 24 lösbar und gelenkig mit dem Ende 18 des Wischerarmes 12 verbindbar ist. Die gelenkige Verbindung erfolgt über eine Drehachse 26, die in etwa senkrecht zur Wischerachse 16 verläuft.

Figur 1 soll nur den Grundaufbau eines Scheibenwischers 10 verdeutlichen. Nach anderen Ausführungen kann die Form des Wischerarmes 12 auch anders gewählt sein. Insbesondere sind Scheibenwischer 10 bekannt, bei denen der Wischerarm 12 über seine gesamte Länge ein im Wesentlichen U-förmiges Profilteil ausbildet, das das Wischerblatt 22 zumindest teilweise umgreift. Ein derartiges U-förmiges Profilteil besitzt drei Schenkel, von denen ein Schenkel im Wesentlichen in Fahrtrichtung, ein Schenkel im Wesentlichen entgegengesetzt der Fahrtrichtung angeordnet ist und ein dritter Schenkel die beiden Schenkel miteinander verbindet und im Wesentlichen oberhalb des Wischerblattes angeordnet ist.

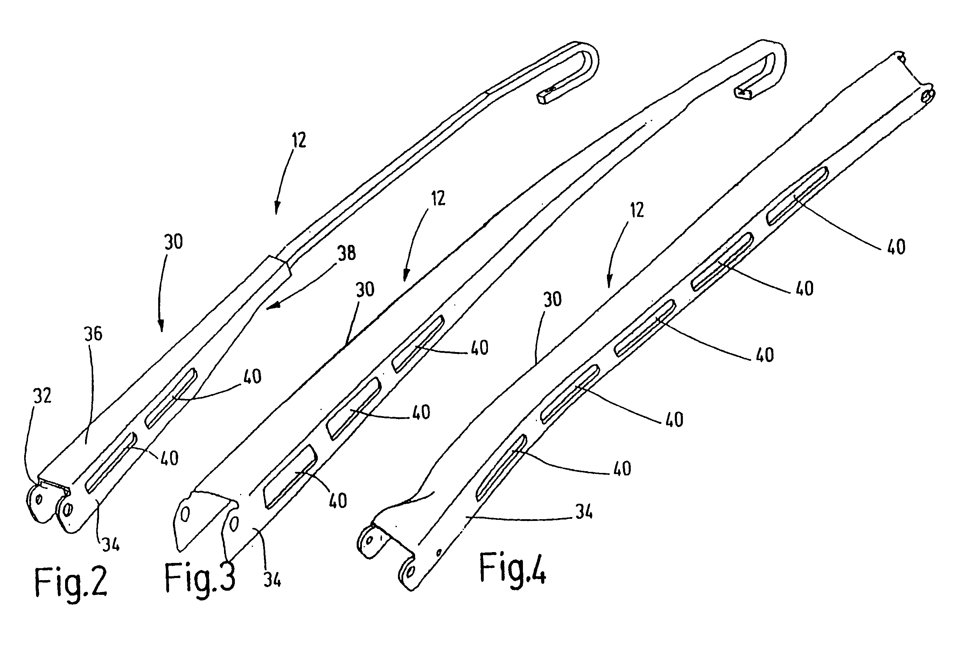

Anhand der nachfolgenden Figuren 2 bis 9 sind verschiedene Ausgestaltungen derartiger Wischerarme 12 in schematischen Perspektivansichten dargestellt. Anhand der Perspektivansichten wird deutlich, dass der Wischerarm 12 ein U-förmiges Profilteil 30 umfasst, dessen einer erster Schenkel 32 bei an einer zu wischenden Scheibe anliegendem Scheibenwischer 10 im Wesentlichen in Fahrtrichtung eines Kraftfahrzeuges gerichtet ist, ein gegenüber liegender zweiter Schenkel 34 entsprechend entgegengesetzt angeordnet ist und ein dritter Schenkel 36 die Schenkel 32 und 34 verbindet. Durch dieses U-förmige Profilteil 30 wird eine Aufnahme 38 ausgebildet, in die ein in den Figuren 2 bis 9 nicht dargestelltes Wischerblatt 22 zumindest teilweise eingreift. Je nach der unterschiedlichen Konstruktionsweise, zum Beispiel gelenkige Verbindung zwischen Wischerblatt 22 und Wischerarm 12 oder nicht gelenkige Verbindung, besitzt die Verbindungsstelle zwischen Wischerarm und Wischerblatt unterschiedliche konstruktive Merkmale, auf die im Rahmen der vorliegenden Beschreibung jedoch nicht näher eingegangen werden soll. Ferner ergeben sich hierdurch unterschiedliche Längenabschnitte des Wischerblattes, die von dem Profilteil 30 des Wischerarmes 12 überdeckt werden.

Bei den Wischerarmen 12 ist vorgesehen, dass das Profilteil 30 an seinem Schenkel 34 und/oder seinem Schenkel 36 wenigstens eine Öffnung 40 besitzt. Diese wenigstens eine Öffnung 40 ist hierbei an den Schenkeln 34 beziehungsweise 36 angeordnet, die nicht im Wesentlichen in Fahrtrichtung des Fahrzeuges vorne liegen. Figur 2 zeigt einen Wischerarm 12 mit zwei Öffnungen 40 im Schenkel 34. Figur 3 zeigt einen Wischerarm 12 mit drei Öffnungen 40 im Schenkel 34 während Figur 4 einen Wischerarm 12 mit fünf Öffnungen 40 im Schenkel 34 zeigt. Eine Kontur der Öffnungen 40 ist hierbei dem Verlauf der Schenkel 34 angepasst, das heißt, die Öffnungen 40 können unterschiedliche Konturen aufweisen.

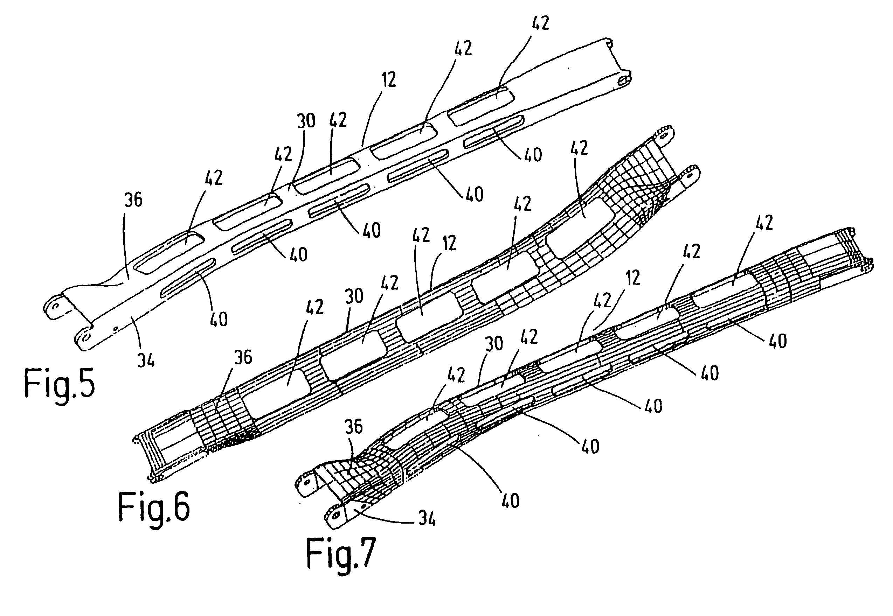

Bei den in den Figuren 5 und 7 gezeigten Ausführungen sind zusätzlich zu den Öffnungen 40 im Schenkel 34 weitere Öffnungen 42 im Schenkel 36 angeordnet. Eine alternative Ausführung zeigt Figur 6, wo ausschließlich im Schenkel 36 Öffnungen 42 vorgesehen sind.

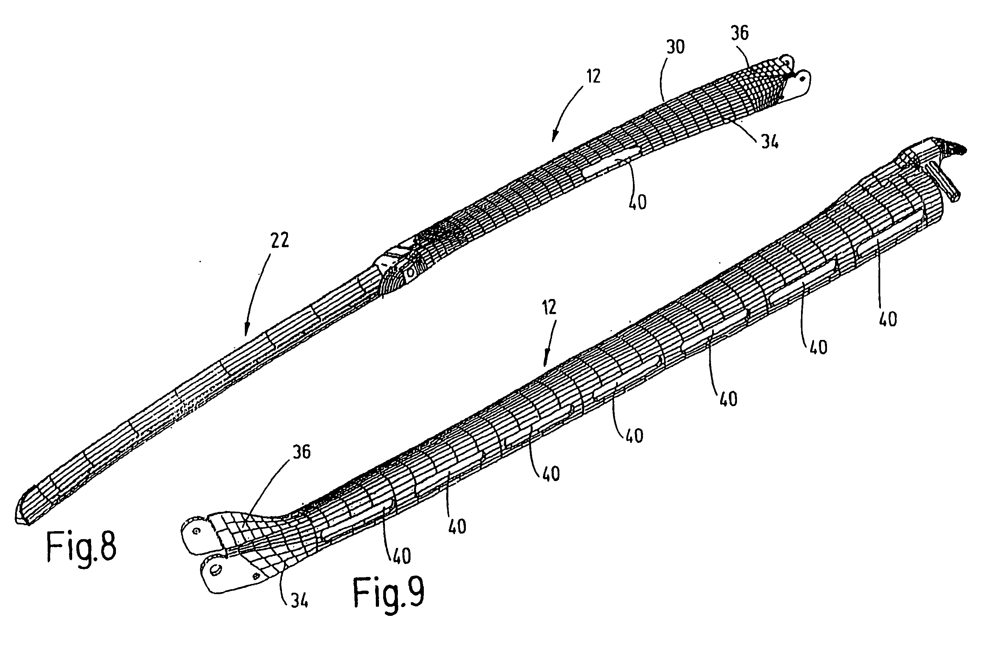

In Figur 8 und 9 sind Ausführungen sogenannter Hochgeschwindigkeits-Scheibenwischer 10 gezeigt, deren Wischerarme 12 aerodynamisch an die Wischerblätter 22 angepasst sind. Figur 9 zeigt wiederum eine Ausführung, bei der im Schenkel 34 Öffnungen 40 vorgesehen sind. Bei der in Figur 8 gezeigten Ausführung ist das Wischerblatt 22 integral mit dem Wischerarm 12 ausgebildet. Auch hier ist wenigstens eine Öffnung 40 im Bereich des Schenkels 34 vorgesehen. Aufgrund der aerodynamischen Gestaltung des Wischerarmes 12 gehen die Schenkel 34, 36 und 32 mehr oder weniger fließend ineinander über, so dass die wenigstens eine Öffnung 40 auch in einem Übergangsbereich zwischen den Schenkeln 34 und 36 angeordnet sein kann.

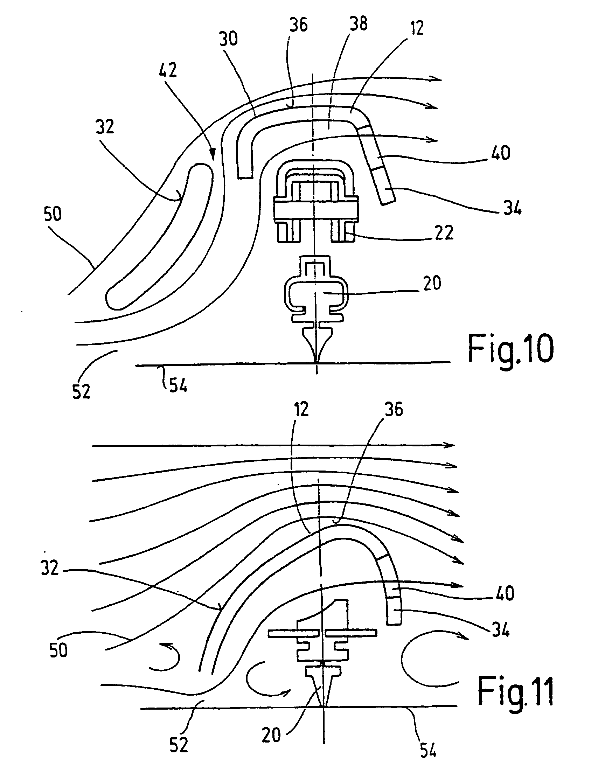

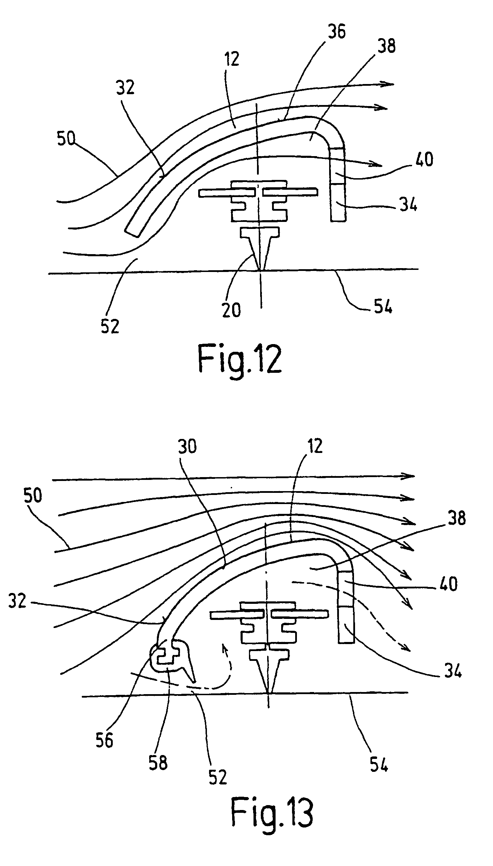

Anhand der nachfolgenden Figuren 10 bis 13 werden Schnittansichten durch einen Wischerarm 12 und ein von dem Wischerarm 12 umschlossenes Wischerblatt 22 gezeigt. Anhand der Figur 13 werden die vorteilhaften Wirkungen der erfindungsgemäßen Gestaltung des Wischerarms 12 verdeutlicht.

Figur 10 zeigt eine Ausführung, bei der das U-förmige Profilteil 30 dem hinteren Schenkel 34 zugeordnete Öffnungen 40 und dem oberen Schenkel 36 zugeordnete Öffnungen 42 aufweist. Anhand der schematisch eingezeichneten Strömungslinien 50 einer anströmenden Luft wird deutlich, dass diese zum Teil an der aerodynamisch gestalteten Form des Schenkels 32 umgelenkt und über den Wischerarm 12 geführt wird. Ein verbleibender Spalt 52 zwischen dem U-förmigen Profilteil 30 und einer Scheibe 54 lässt ebenfalls einen Teil der Luftströmung in das "Innere", also die Aufnahme 38 des Profilteils 30, passieren. Durch die Öffnungen 40 und/oder 42 wird dieser Strömungsanteil aus der Aufnahme 38 hinaus geführt, so dass innerhalb der Aufnahme 38 kein Staudruck entstehen kann, der zu einem Abheben des Wischerarmes 12 von der Scheibe 54 führt.

In den Figuren 11 und 12 sind zwei Ausführungen gezeigt, bei denen lediglich im hinteren Schenkel 34 wenigstens eine Öffnung 40 vorgesehen ist. Im Gegensatz zu der in Figur 10 gezeigten konkaven Wölbung des Schenkels 32 sind hier die Schenkel 32 konvex gewölbt, so dass entsprechende Strömungslinien 50 die Luftströmung am Wischerarm 12 vorbei führen und der Luftanteil, der in die Aufnahme 38 gelangt, durch die wenigstens eine Öffnung 40 ohne Aufbau von Staudruck nach außen geführt wird.

Gemäß dem in Figur 13 gezeigten, erfindungsgemäßen Ausführungsbeispiel ist zusätzlich am unteren Ende 56 des Schenkels 32 eine Spoilerlippe 58 vorgesehen, die aus einem elastischen Material, beispielsweise Kunststoff, Gummi oder dergleichen, besteht. Die Spoilerlippe 58 führt zu einer Verringerung des Spaltes 52 zwischen der Scheibe 54 und dem Haltearm 12 im Bereich des vorderen Schenkels 32 des U-förmigen Profilteiles 30. Hierdurch wird der Anteil der Luftströmung 50, der in die Aufnahme 38 des Wischerarmes 12 gelangen kann, verringert. Gleichzeitig bildet die Spoilerlippe 58 in an sich bekannter Weise einen Schutz für die Scheibe 54, indem ein Aufschlagen des relativ harten Materials des Profilteiles 30 auf die Scheibe 54 bei ungünstigen Windverhältnissen oder einer mechanischen Kraftbeaufschlagung verhindert wird.

Insgesamt wird anhand der Figuren deutlich, dass durch die Ausbildung eines integrierten Spoilers in dem Wischerarm 12 eine strömungsgünstige Gestalt erhalten wird. Die vorgesehenen Öffnungen 40 und/oder 42 verhindern den Aufbau eines Staudruckes in der Aufnahme 38 und somit einem Anlagedruck an der Scheibe 54 entgegengerichteten Aufbau einer Kraftkomponente. Gleichzeitig führen die Öffnungen 40 und 42 zu einer Gewichtsreduktion des Wischerarmes 12. Ferner wird durch die Anordnung der Öffnungen 40 beziehungsweise 42 erreicht, dass bei einer stoßförmigen Belastung des Wischerarmes 12 in Richtung der Scheibe 54 der Wischerarm 12 in der Lage ist, eine elastische und/oder plastische Verformung zu erfahren, so dass eine Absorption der aufgebrachten Stoßenergie möglich ist. Hierdurch ergibt sich eine Verringerung von Verletzungsrisiken von eventuell mittels des die Scheibenwischer 10 aufweisenden Kraftfahrzeuges kollidierenden Personen. In Längserstreckung des Wischerarmes 12 ist dieser trotz der Öffnungen 40 und/oder 42 und der elastischen beziehungsweise plastischen Verformungsmöglichkeiten in Richtung der Scheibe 54 biegesteif ausgeführt. Hierdurch wird eine gleichbleibend hohe Wischqualität sichergestellt.

## Patentansprüche

1. Scheibenwischer für ein Fahrzeug, insbesondere Kraftfahrzeug, mit einem antreibbar gelagerten Wischerarm, der ein Wischerblatt trägt, wobei der Wischerarm das Wischerblatt zumindest teilweise umschließt und von einem im Wesentlichen U-förmigen, drei Schenkel aufweisenden Profilteil gebildet ist, wobei das Profilteil einen im Wesentlichen in Fahrtrichtung des Fahrzeuges weisenden Schenkel (32) aufweist und an den weiteren der Schenkel (34, 36) wenigstens eine Luftausströmöffnung (40, 42) ausgebildet ist, **dadurch gekennzeichnet, dass** der im Wesentlichen in Fahrtrichtung weisende Schenkel (32) eine in Richtung der zu wischenden Scheibe (54) weisende, integrierte Spoilerlippe (58) aufweist, die aus einem elastischen Material besteht.

2. Scheibenwischer nach Anspruch 1, **dadurch gekennzeichnet, dass** die wenigstens eine Öffnung (40, 42) in einem Übergangsbereich zwischen den Schenkeln (34, 36) angeordnet ist.

3. Scheibenwischer nach einem der vorhergehenden Ansprüche, **dadurch gekennzeichnet, dass** der Schenkel (32) konkav ausgebildet ist.

4. Scheibenwischer nach einem der Ansprüche 1 und 2, **dadurch gekennzeichnet, dass** der Schenkel (32) konvex ausgebildet ist.

5. Scheibenwischer nach einem der Ansprüche 1 und 2, **dadurch gekennzeichnet, dass** der Schenkel (32) gerade ist.

## Claims

1. Wiper for a vehicle, in particular motor vehicle, having a wiper arm which is mounted driveably and bears a wiper blade, the wiper arm at least partially surrounding the wiper blade and being formed by an essentially U-shaped profile part having three limbs, the profile part having one limb (32) facing essentially in the direction of travel of the vehicle, and at least one air discharge opening (40, 42) being formed on the further limbs (34, 36), **characterized in that** the limb (32) facing essentially in the direction of travel has an integrated spoiler lip (58) which faces in the direction of the glass surface (54) to be wiped and is composed of an elastic material.

2. Wiper according to Claim 1, **characterized in that** the at least one opening (40, 42) is arranged in a transition region between the limbs (34, 36).

3. Wiper according to one of the preceding claims, **characterized in that** the limb (32) is of concave design.

4. Wiper according to either of Claims 1 and 2, **characterized in that** the limb (32) is of convex design.

5. Wiper according to either of Claims 1 and 2, **characterized in that** the limb (32) is rectilinear.

## Revendications

1. Essuie-glace de véhicule, notamment de véhicule automobile comportant un bras d'essuie-glace monté de manière à entraîner et portant un balai d'essuie-glace, le bras entourant, au moins en partie, le balai d'essuie-glace en étant formé par une pièce profilée essentiellement en forme de U ayant trois branches, la pièce profilée ayant une branche (32) dirigée dans la direction de déplacement du véhicule et les autres branches (34, 36) comportant au moins un orifice de sortie d'air (40, 42)
**caractérisé en ce que**
la branche (32) dirigée principalement dans la direction de déplacement comporte une lèvre de déflecteur (58) intégrée, dirigée vers la vitre à essuyer (54), cette lèvre étant en matière élastique.

2. Balai d'essuie-glace de véhicule selon la revendication 1,
**caractérisé en ce qu'**
au moins un orifice (40, 42) est prévu dans la zone transitoire entre les branches (34, 36).

3. Balai d'essuie-glace de véhicule selon la revendication 1,
**caractérisé en ce que**
la branche (32) a une forme concave.

4. Balai d'essuie-glace de véhicule selon l'une des revendications 1 et 2,
**caractérisé en ce que**
la branche (32) est convexe.

5. Balai d'essuie-glace de véhicule selon l'une des revendications 1 et 2,
**caractérisé en ce que**
la branche (32) est droite.
